# EUROPÄISCHE PATENTSCHRIFT

(11) **EP 3 628 473 B1**
(45) Veröffentlichungstag und Bekanntmachung des Hinweises auf die Patenterteilung: **09.02.2022**
(21) Anmeldenummer: 19199931.7
(22) Anmeldetag: 26.09.2019
(51) Int. Cl.: B29C 70/38, G01B 11/30, G01N 21/00, B29C 70/54, G01N 21/3563, G01N 21/88, G01N 21/84

(54) **VERFAHREN UND VORRICHTUNG ZUM ERMITTELN VON FEHLSTELLEN VON FASERMATERIALIEN**
METHOD AND DEVICE FOR DETERMINING DEFECTS IN FIBROUS MATERIALS
PROCÉDÉ ET DISPOSITIF DE DÉTERMINATION DE DÉFAUTS DANS DES MATÉRIAUX FIBREUX

(30) Priorität: 28.09.2018 DE 102018124079
(43) Veröffentlichungstag der Anmeldung: 01.04.2020
(73) Patentinhaber: Deutsches Zentrum für Luft- und Raumfahrt e.V., 51147 Köln (DE)
(72) Erfinder: Meister, Sebastian, 21680 Stade (DE)
(74) Vertreter: Gramm, Lins & Partner Patent- und Rechtsanwälte PartGmbB

(56) Entgegenhaltungen:
- US-A1- 2004 031 567
- US-A1- 2007 271 064

## Beschreibung

Die Erfindung betrifft ein Verfahren zum Ermitteln von Fehlstellen von auf einem Werkzeug abgelegtem, vorimprägniertem Fasermaterial eines Faserverbundwerkstoffes zur Herstellung eines Faserverbundbauteils. Die Erfindung betrifft ebenso eine Faserlegeanlage zum Ablegen von Fasermaterial auf einem Werkzeug zur Herstellung eines Faserverbundbauteils.

Aufgrund der gewichtsspezifischen Festigkeit und Steifigkeit von Faserverbundbauteilen, die aus Faserverbundwerkstoffen hergestellt werden, sind derartige Bauteile aus der Luft- und Raumfahrt sowie aus der Automobilebereich heutzutage kaum mehr wegzudenken. Bei der Herstellung eines Faserverbundbauteils wird dabei ein in ein Fasermaterial infundiertes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in die vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Neben trockenen Fasermaterialien, die in einem anschließenden Infusionsprozess mit dem Matrixmaterial infundiert werden, werden oftmals auch bereits vorimprägnierte Fasermaterialien (sogenannte Prepregs) verwendet, bei denen das Fasermaterial mit dem Matrixmaterial bereits vorimprägniert ist. Ein anschließender Infusionsprozess ist dann in der Regel nicht mehr notwendig. Vor dem Aushärten des Matrixmaterials wird in der Regel das Fasermaterial in ein Formwerkzeug eingebracht, dass mit seiner formgebenden Werkzeugoberfläche die spätere Bauteileilform nachbildet.

Zur Herstellung von großskalligen Strukturbauteilen, wie beispielsweise Flügelschalen von Verkehrsflugzeugen, werden zur Optimierung des Ablegeverfahrens automatisierte Faserlegeprozesse verwendet, bei denen mit Hilfe einer Fertigungsanlage und mindestens einem Faserlegekopf der Fertigungsanlage ein dem Faserlegekopf zugeführtes Fasermaterial auf das Werkzeug gedrückt und somit abgelegt wird. Bei der sogenannten Fiber Placement Technologie werden beispielsweise vorimprägnierte Fasermaterialien bahnweise auf dem Formwerkzeug mit Hilfe eines solchen Faserlegekopfes abgelegt. Der Faserlegekopf ist dabei an einem Roboter angeordnet und kann gegenüber dem Formwerkzeug relativ bewegt werden. Hierdurch können die einzelnen Faserbahnen auf der Werkzeugoberfläche schließlich abgelegt werden. Bei der Fiber Placement Technologie werden gleichzeitig mehrere, meist acht, sechzehn oder zweiunddreißig schmale Materialstreifen, sogenannte Tows, auf dem Werkzeug abgelegt. Im Gegensatz hierzu werden bei der Fiber Tape Laying Technologie meist breite Faserbahnen (auch Tapes genannt) in der Regel 150 mm, 300 mm oder 600 mm breit mit einer Dicke von wenigen zehntel Millimeter mit Hilfe des Faserlegekopfes auf dem Formwerkzeug abgelegt.

Mit Hilfe der Faserlegeköpfe und den Fasermaterialien werden dann in dem Formwerkzeug Faserlaminate, auch Faserpreformen genannt, hergestellt, bei denen schlussendlich der Prozess des Aushärtens des Matrixmaterials noch nicht stattgefunden hat. Derartige Faserlaminate bilden somit das Bauteil in einem Rohzustand vor dem Aushärten des Matrixmaterials.

Derartige Faserlaminate, gerade bei großskalligen Strukturbauteilen, bestehen nicht selten aus mehreren Einzellagen, die je nach Anwendungsgebiet des Bauteils auch mehr als einhundert Lagen aufweisen können. Zur Gewährleistung einer hohen Bauteilqualität muss die Anzahl auftretender Prozessfehler bei der Ablage des Fasermaterials (beispielsweise Tapes oder Tows) minimiert oder gänzlich verhindert werden. Das Auftreten von Prozessfehlern beziehungsweise Fertigungsabweichungen mit großem negativem Einfluss auf die Festigkeit der Bauteilstruktur muss nach Möglichkeit vollständig im Prozess erkannt und gegebenenfalls korrigiert werden.

Aus der Praxis ist die manuelle Inspektion bekannt und stark verbreitet. In Abhängigkeit von der Laminatgröße, der Mitarbeiterverfügbarkeit sowie der Fehlerhäufigkeit innerhalb einer Laminatschicht werden im Mittel etwa fünfzehn bis dreißig Minuten benötigt, um die Ablage einer Laminatschicht im Hinblick auf Fertigungsabweichungen zu untersuchen. Unter Fertigungsabweichungen werden hierbei Ablagefehler verstanden, die im späteren hergestellten Bauteil zu Fehlstellen und Strukturschwächungen führen können. Bei Flügelschalen von Kurzstreckenflugzeugen kann die Anzahl einzelner Laminatschichten bis zu vierhundert betragen, woraus sich sechstausend bis zwölftausend Minuten Anlagestillstand pro Anlagebauteil ergeben, die auf die händische Inspektion der automatisierten Ablage zurückzuführen sind. Ebenso ist die Inspektion durch einen Werker stark vom Erfahrungsgrad abhängig und darüber hinaus nicht in dem Maße qualitativ ausreichend, wie es die Fertigungstoleranz eigentlich erfordert. Als Beispiel ist ein zulässiger Abstand zwischen zwei Materialbahnen von einem Millimeter genannt, der qualitativ nur unter Anwendung von Hilfsmitteln und dies auch nur stichpunktartig untersucht werden kann.

Es wurden daher zur Verbesserung der qualitativen Überprüfung der Faserlaminate messtechnische Erfassungssysteme entwickelt, wie sie beispielsweise aus der DE 10 2013 112 260 A1, DE 10 2013 104 545 A1 sowie DE 10 2013 104 546 A1 aus dem Hause des Anmelders bekannt sind. Bei der messtechnischen Erfassung werden Fehlstellen von auf einer Werkzeugoberfläche abgelegter Faserhalbzeuge beziehungsweise Fasermaterialien erkannt, in dem mittels eines optischen Lichtprojektionsverfahrens, bei dem das abgelegte Fasermaterial mit einer Lichtquelle aus einem ersten Winkel beleuchtet und das von der Faseroberfläche reflektierte Licht aus einem anderen Winkel aufgenommen wird, ein Höhenprofil der Faserhalbzeugoberfläche erstellt wird, das dann mit Hilfe einer Bildauswerteeinheit untersucht und analysiert wird. Aus den Höhenprofilen lassen sich nämlich aufgrund der charakteristischen Abweichung der einzelnen Prozessfehler die Fehlstellen in den Abgelegten Fasermaterialien detektieren. Dabei kann unter anderem vorgesehen sein, dass das Ermitteln des Höhenprofils mit Hilfe des Lichtschnittverfahrens sowie der Ermittlung von Fehlstellen aus diesen Höhenprofilen im Nachgang zum Ablegeprozess stattfindet, sodass Fertigungsabweichungen aktuell abgelegter Fasermaterialien (beispielsweise aktuell abgelegter Fasermaterialbahnen) sofort erkannt werden können.

Hierdurch wird eine messtechnische Erfassung von Fertigungsabweichungen (beispielsweise Ablegefehler) im Nachlauf des Ablegeprozesses möglich, um ein nachgelagertes Qualitätssicherungssystem zu erhalten. So können Fehler erkannt und gegebenenfalls ausgebessert werden. Außerdem ist eine Dokumentation der Bauteilherstellung möglich.

Es hat sich jedoch gezeigt, dass bei der Verwendung von vorimprägniertem Fasermaterialien, sogenannten Prepregs, eine messtechnische Erfassung von Fertigungsabweichungen mit Hilfe eines Lichtprojektionsverfahrens unter Umständen nicht die notwendige Messgenauigkeit und Erkennungsrate liefert. Grund hierfür ist die Tatsache, dass sich auf der Oberfläche der Prepregmaterialien häufig Ablagerungen von Matrixmaterialien beziehungsweise Rückstände derartiger Matrixmaterialien befinden, die ein sehr komplexes Rückstrahlverhalten der Prepreg-Fasermaterialien auf der Oberfläche erzeugen. Diese Matrixmaterialablagerungen sorgen für ein diffuses Verhalten und nur schwer nutzbares Rückstrahlverhalten, wodurch die mit Hilfe einer herkömmlich Kamera aufgenommenen Bilddaten nur sehr schwierig im Hinblick auf mögliche Fehlstellen automatisiert analysierbar sind.

Die US 2004/0031567 A1 zeigt ein Verfahren zum Überprüfen der Oberfläche abgelegter Fasermaterialien mittels eines Kamerasystems und einer Beleuchtungseinheit, wobei hier Aufnahmen im Infrarotbereich möglich sein sollen.

Die US 2007/0271064 A1 offenbart ein ähnliches System, bei dem jedoch eine Laserlinie auf das Fasermaterial schräg projiziert und mit einer Kamera erfasst wird. Es handelt sich hierbei mehr oder weniger um eine Art Laserlichtschnittsensor, mit dem Fehlstellen anhand einer Abweichung der Laserlinie von einer geraden Linie detektiert werden sollen.

Es ist daher Aufgabe der vorliegenden Erfindung ein verbessertes Verfahren und eine verbesserte Vorrichtung anzugeben, mit dem Fehlstellen von auf einem Werkzeug abgelegten, vorimprägniertem Fasermaterialien automatisiert und prozesssicher erkannt werden können.

Die Aufgabe wird mit dem Verfahren gemäß Anspruch 1 sowie der Faserlegeanlage gemäß Anspruch 8 erfindungsgemäß gelöst.

Gemäß Anspruch 1 wird ein Verfahren zum Ermitteln von Fehlstellen von auf einem Werkzeug abgelegtem, vorimprägniertem Fasermaterial (Prepregs) eines Faserverbundwerkstoffes zur Herstellung eines Faserverbundbauteils vorgeschlagen, wobei das Fasermaterial zunächst auf ein Werkzeug beziehungsweise Formwerkzeug abgelegt wurde. In der Regel werden hierbei quasiendlose Fasermaterialien wie beispielsweise Tapes oder Tows, mit Hilfe einer Legeanlage abgelegt, wobei nicht selten das Bauteil aus mehreren Einzellagen derartig abgelegter Fasermaterialaien gebildet wird. Jede einzelne Faserschicht sollte dabei auf Fehlstellen untersucht werden, um Fehlstellen im späteren Bauteil zu vermeiden.

So ist es beispielsweise denkbar, dass das Fasermaterial mit Hilfe eines an einem Roboter angeordneten Faserlegekopfes auf einem Formwerkzeug abgelegt wird, wobei dem Faserlegekopf kontinuierlich das quasiendlose Fasermaterial zugeführt wird. Der Faserlegekopf bewegt sich nun aufgrund der Ansteuerung des Roboters entlang einer vorgegebenen Bahntrajektorie, um das Fasermaterial bahnförmig entlang der vergebenen Trajektorie abzulegen.

Mit Hilfe des vorliegenden Verfahrens sollen somit insbesondere bei der Faserablage entstandene Fehlstellen des bereits abgelegten Fasermaterials detektiert werden, wie beispielsweise Lufteinschlüsse, Fremdkörper, Lücken zwischen benachbarten Fasermaterialbahnen und ähnlichem, die gegebenenfalls zu einem späteren Zeitpunkt auch nicht mehr korrigierbar wären.

Erfindungsgemäß wird hierbei vorgeschlagen, dass die Fasermaterialoberfläche des abgelegten, vorimprägnierten Fasermaterials durch mindestens zwei Bildsensoren einer bildgebenden Aufnahmevorrichtung in einem Wellenlängenspektrum außerhalb des sichtbaren Spektrums aufgenommen wird, um digitale Bilddaten der Fasermaterialoberfläche zu generieren. Eine solche Aufnahme in einem Wellenlängenspektrum außerhalb des sichtbaren Spektrums beziehungsweise des sichtbaren Lichtes kann beispielsweise das Wellenlängenspektrum der Infrarotstrahlen und/oder das Wellenlängenspektrum der Ultraviolettstrahlen sein. Durch die Aufnahme der Fasermaterialoberfläche mit den Bildsensoren im Wellenlängenspektrum außerhalb des sichtbaren Spektrums werden somit digitale Bilddaten der Fasermaterialoberfläche generiert, die dann einer Auswerteeinheit zugeführt werden. Zusätzlich können die so aufgenommenen digitalen Bilddaten für eine spätere Bauteildokumentation und einem digitalen Datenspeicher abgelegt werden.

Die Aufnahme der Fasermaterialoberfläche im Wellenlängenspektrum außerhalb des sichtbaren Lichtes generiert dabei Bilddaten, die die Rückstrahlintensität im jeweiligen Spektrum darstellen und somit entsprechend konvertiert werden. Die generierten Bilddaten können demzufolge beispielsweise Grauwerte enthalten, wobei jedem Grauwert in den generierten Bilddaten ein entsprechender Aufnahmewert im Wellenlängenspektrum außerhalb des sichtbaren Spektrums entspricht. Alternativ kann auch ein Falschfarbenbild generiert werden, bei dem jedem Farbwert in den digitalen Bilddatenaufnahmewert einer Aufnahme der Fasermaterialoberfläche im Wellenspektrum außerhalb des sichtbaren Lichtes entspricht.

Mit Hilfe der Auswerteeinheit werden die so generierten digitalen Bilddaten bei der Aufnahme der Fasermaterialoberfläche analysiert, um Fehlstellen in dem abgelegten, vorimprägnierten Fasermaterial ermitteln zu können. Hierbei kann beispielsweise eine Bildauswertung erfolgen, um beispielsweise Sprünge in den digitalen Bilddaten zu erkennen oder andere charakteristische Eigenschaften, die auf eine Fehlstelle schließen lassen.

Die Erfinder haben hierbei erkannt, dass die sich auf den vorimprägnierten Fasermaterialien befindenden Matrixmaterialablagerungen beziehungsweise Matrixmaterialrückständen ein von der Faser abweichende Wärmekapazität und abweichendes Wärmerückstrahlverhalten haben, sodass die Rückstände auf den Prepreg-Materialien dennoch einer Auswertung hinsichtlich der Erkennung von Fehlstellen ermöglichen. Außerhalb des sichtbaren Spektrums weisen die Fasermaterialien und die Matrixmaterialien somit ein voneinander verschiedenes Reflektion- und Rückstrahlverhalten auf, was dazu genutzt werden kann, die auf dem Prepreg befindlichen Rückstände von Matrixmaterial gegenüber den Fasern des Fasermaterials zu unterscheiden und so entsprechend markante, charakteristische Punkte (wie bspw. Fehlstellen) erkennen zu können. Im sichtbaren Spektrum der elektromagnetischen Strahlung hingegen kann dies unter Umständen aufgrund des diffusen Rückstrahlverhaltens nicht immer Prozesssicher gewährleistet werden.

Das Wellenlängenspektrum außerhalb des sichtbaren Spektrums ist dabei gemäß der vorliegenden Erfindung außerhalb der Wellenlänge zwischen 400 nm und 750 nm definiert. Mit anderen Worten gemäß dem erfindungsgemäßen Verfahren wird die Fasermaterialoberfläche durch mindestens zwei Bildsensoren in einem Wellenlängenspektrum außerhalb der Wellenlänge zwischen 400 nm und 750 nm aufgenommen.

Bevorzugterweise wird die Fasermaterialoberfläche mittels der bildgebenden Aufnahmevorrichtung in ein Wellenlängenspektrum im Infrarotstrahlenbereich und/oder im Wellenlängenbereich im Ultraviolettstrahlenbereich aufgenommen.

Als Fehlstelle im Sinne der vorliegenden Erfindung werden dabei insbesondere Stufen, Überlappungen, Spalten, Verwerfungen, Welligkeiten, Lufteinschlüsse, Fremdkörper, Materialablösungen, Materialansammlungen und/oder Materialfehler erkannt. Wie bereits angesprochen, wird erfindungsgemäß in den aufgenommen digitalen Bilddaten mittels einer auf der Auswerteeinheit ausgeführten Bilderkennung entsprechende Ablagerungen oder Rückstände von Matrixmaterial auf dem abgelegten, vorimprägniertem Fasermaterial detektiert, um diese beispielsweise von dem Fasermaterial abgrenzen zu können. Das Erkennen der Ablagerungen beziehungsweise Rückstände von Matrixmaterial kann aber auch als Positionsinformation genutzt werden, wie dies später noch dargelegt wird.

Erfindungsgemäß werden des Weiteren erste Bilddaten von einem ersten Bildsensor der Aufnahmevorrichtung aus einer ersten Aufnahmerichtung und mindestens zweite Bilddaten von einem mindestens zweiten Bildsensor der Aufnahmevorrichtung aus einer von der ersten Aufnahmerichtung verschiedenen zweiten Aufnahmerichtung aufgenommen, wodurch ein entsprechender Aufnahmebereich beziehungsweise ein gemeinsamer Aufnahmebereich aus zwei unterschiedlichen Aufnahmerichtungen aufgenommen wird. Mit Hilfe eines solchen Multi-Kamera-Systems wird es dann möglich, eine dreidimensionale Oberflächeninformation der aufgenommenen Fasermaterialoberfläche anhand der aufgenommenen ersten und zweiten digitalen Bilddaten zu generieren, wodurch die Erkennung von Fehlstellen deutlich verbessert werden kann. Somit lassen sich 3D-Informationen der aufgenommenen Fasermaterialoberfläche generieren, die sich allein aus den unterschiedlichen Aufnahmerichtungen der beiden bildgebenden Bildsensoren ergibt. Da die beiden Bildsensoren der Aufnahmevorrichtung zur Aufnahme der Fasermaterialoberfläche gerade bei großen Bauteilen gegenüber der Fasermaterialoberfläche relativ bewegt werden (beispielsweise im Nachlauf des Ablegeprozesses), müssen die ersten Bilddaten des ersten Bildsensors mit den zweiten Bilddaten des zweiten Bildsensors synchronisiert werden, damit die aufgenommenen Bilddaten auch den gleichen Aufnahmebereich zeigen. Hierfür ist es denkbar, dass die beiden Bildsensoren durch eine Synchronisationseinheit zeitlich zur Aufnahme der Bilddaten so synchronisiert werden, sodass sie immer zum jeweiligen diskreten Synchronisationszeitpunkt ein Bild aufnehmen.

Aufgrund der Tatsache, dass derartige synchronisierte Bildsensoren relativ teuer sind, besteht auch die Möglichkeit, die unsynchronisiert aufgenommenen Bilddaten des ersten und des zweiten Bildsensors im Nachgang in Deckung zu bringen, sodass ein jeweiliger Bildpunkt in den ersten Bilddaten dem jeweiligem Bildpunkt in den zweiten Bilddaten entspricht. Denn aufgrund der Bewegung und der nicht synchronisierten Aufnahme kann es passieren, dass die Aufnahme eines ersten Bildes zu einem früheren oder späteren Zeitpunkt erfolgt als die Aufnahme des zweiten Bildes des zweiten Bildsensors, wodurch beide Bilder nicht mehr exakt übereinander liegen.

Um die beiden aus unterschiedlichen Aufnahmerichtungen aufgenommenen digitalen Bilddaten nun jedoch in Deckung zu bringen, bedarf es einer entsprechenden Positionsinformation innerhalb der aufgenommen digitalen Bilddaten, anhand dessen die Auswerteeinheit die beiden aufgenommen digitalen Bilder beziehungsweise Bilddaten in Deckung bringen kann.

Durch das Erkennen der Ablagerungen beziehungsweise Rückständen von Matrixmaterial was sich aufgrund des unterschiedlichen Rückstrahlverhaltens dieser Materialien im nicht sichtbaren Wellenlängenspektrum ergibt, kann die Möglichkeit geschaffen werden, eine solche Positionsinformation zu generieren, da diese Rückstände beziehungsweise Ablagerungen eine nahezu zufällige Form besitzen und so die Form und die Anordnung der einzelnen Rückstände in Kombination einzigartig und charakteristisch für einen bestimmten Bildbereich sind. Die Harzrückstände beziehungsweise Ablagerungen werden nun in den ersten Bilddaten und in den zweiten Bilddaten erkannt, wobei aufgrund der charakteristischen Form und Anordnung diese dazu genutzt werden können, die beiden digitalen Bilder des ersten Bildsensors und des zweiten Bildsensors in Deckung bringen zu können. Demzufolge sind diese charakteristischen Bereiche der Ablagerungen beziehungsweise Rückstände von Matrixmaterial als Positionsinformation sichtbar, umso die aus verschiedenen Richtungen und Zeitpunkten aufgenommenen digitalen Bilddaten automatisiert durch eine Bilderkennung der Auswerteeinheit in Deckung bringen zu können.

Die Bildsensoren der Aufnahmevorrichtung werden dabei gemäß der vorliegenden Erfindung vorteilhafterweise während der Aufnahme der Faserlaminatoberfläche gegenüber dieser verfahren beziehungsweise bewegt. Denkbar ist selbstverständlich auch, dass das Faserlaminat gegenüber einer feststehenden Aufnahmevorrichtung bewegt wird. Wichtig ist letztlich, dass gerade bei großen Bauteilen eine Relativbewegung zwischen Faserlaminat und den Bildsensoren entsteht, um so die gesamte Fasermaterialoberfläche aufnehmen zu können und insbesondere die dreidimensionale Oberflächeninformation der gesamten Oberfläche generieren zu können.

Demzufolge ist es ganz besonders vorteilhaft, wenn die digitalen Bilddaten direkt im Nachlauf einer Faserablage aufgenommen und generiert werden. Hierfür ist es denkbar, dass die digitalen Bildsensoren an dem Faserlegekopf fest angeordnet sind und so in Richtung der Werkzeugoberfläche ausgerichtet sind, dass direkt nach dem Ablegen des Fasermaterials das Fasermaterierial durch die Bildsensoren aufgenommen werden kann. Somit können Fehlstellen sofort erkannt und gegebenenfalls ausgebessert werden.

Um das Rückstrahlverhalten zu verbessern, ist es dabei vorteilhaft, wenn die Fasermaterialoberfläche des abgelegten, vorimprägnierten Fasermaterials mit elektromagnetischer Strahlung mit Wellenlängen außerhalb des sichtbaren Spektrums bestrahlt werden, beispielsweise mit Infrarotstrahlen oder mit Ultraviolettstrahlen.

Die Aufgabe wird im Übrigen auch mit der Faserlegeanlage gemäß Anspruch 8 erfindungsgemäß gelöst, wobei die Faserlegeanlage zur Durchführung des Verfahrens wie vorstehend beschrieben ausgebildet ist.

Die Erfindung wird anhand der beigefügten Figuren beispielhaft erläutert. Es zeigen:
- Figur 1 -: schematische Darstellung der erfindungsgemäßen Fertigungsanlage zur Herstellung eines Faserverbundbauteils;
- Figur 2 -: schematische Darstellung der charakteristischen Harzrückstände auf der Faseroberfläche.

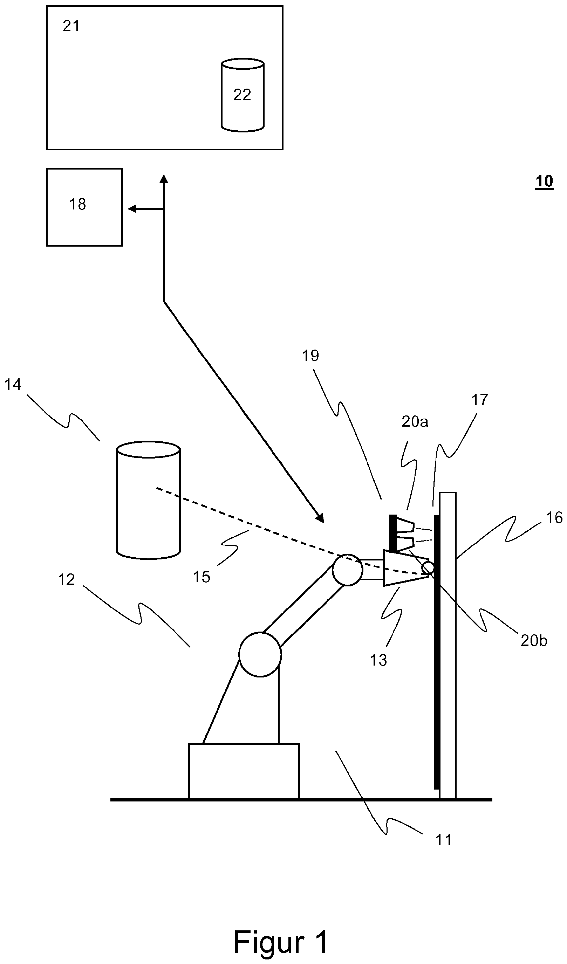

Figur 1 zeigt in einer schematisch stark vereinfachten Form die wesentlichen Elemente einer Fertigungsanlage 10 zur Herstellung eines Faserlaminates 17. Die Fertigungsanlage 10 weist zunächst mindestens eine robotische Faserlegeeinheit 11 auf, die einen mehrachsigen Bewegungsautomaten 12 hat, an dem als Endeffektor ein Faserlegekopf 13 angeordnet ist. Dem Faserlegekopf 13 wird von einem Fasermagazin 14 während des Ablegeprozesses kontinuierlich ein Fasermaterial 15 zugeführt, dass dann auf einem entsprechenden Formwerkzeug 16 zur Herstellung des Fasermaterials 17 abgelegt wird. Durch kontinuierliches Ablegen des Fasermaterials 15 auf den Formwerkzeug 16 kann so auf dem Werkzeug 16 das Fasermateriallaminat 17 hergestellt werden, dass in der Regel aus mehreren Einzellagen von Fasermaterialien bestehen kann. Mit Hilfe des Faserlegekopfes 13 können dabei Tapes oder Tows als Fasermaterial 15 bahnweise abgelegt werden.

Mit Hilfe einer Steuerung 18 mit der die robotische Faserlegeeinheit 11 kommunizierend in Verbindung steht, wird der Faserlegekopf 13 durch die robotische Faserlegeeinheit 11 so bewegt, dass das Fasermaterial 15 an den vorgegebenen Positionen auf dem Formwerkzeug 16 abgelegt wird.

An dem Faserlegekopf ist eine Aufnahmevorrichtung 19 vorgesehen, die schematisch als zum Faserlegekopf 13 zugehörig angedeutet ist.

Die Aufnahmevorrichtung 19 weist hierfür zwei Bildsensoren 20a und 20b auf, die zur Aufnahme von digitalen Bilddaten der Fasermaterialoberfläche in einem Wellenlängenspektrum außerhalb des sichtbaren Lichtes ausgebildet sind.

Wird der Faserlegekopf 13 mit Hilfe der robotischen Legeeinheit 11 gegenüber dem Formwerkzeug 16 zur Ablage des Fasermaterials 15 verfahren, so bewegt sich aufgrund der festen Anordnung der Bildsensoren 20a und 20b die sich ebenfalls simultan mit dem Faserlegekopf 13 mit, sodass während der Faserablage fortwährend auch die Fasermaterialoberfläche der bereits abgelegte, vorimprägnierten Fasermaterial aufgenommen werden kann.

Die Aufnahmevorrichtung 19 stellt dabei mit einer Auswerteeinheit 21 kommunizierend in Verbindung und überträgt die von der Aufnahmevorrichtung 19 aufgenommenen digitalen Bilddaten an die Auswerteeinheit 21.

Die beiden digitalen Bildsensoren 20a und 20b der Aufnahmevorrichtung 19 sind dabei so an dem Faserlegekopf 13 angeordnet, dass sie die Oberfläche des abgelegten Fasermaterials aus jeweils unterschiedlichen Aufnahmerichtungen und Beanstandung voneinander aufnehmen. Außerdem werden beide Bildsensoren 20a und 20b nicht zueinander synchronisiert, sodass sich die diskreten Zeitpunkte der jeweiligen Aufnahme eines Bildes zwischen den beiden Bildsensoren unterscheiden können. Die Auswerteeinheit 21 kann einen digitalen Datenspeicher 22 aufweisen, in dem zum Zwecke der Dokumentation die von der Aufnahmevorrichtung 19 aufgenommenen digitalen Bilddaten abgespeichert und hinterlegt werden.

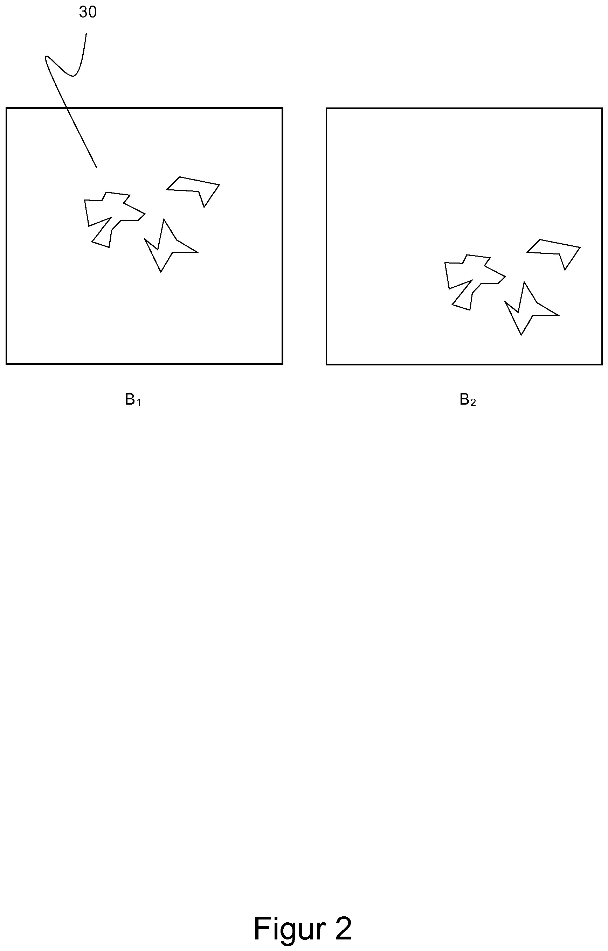

Figur 2 zeigt in einer schematischen Darstellung die Oberfläche eines abgelegten Prepregmaterials, bei dem charakteristische Harzablagerungen aufgrund der Aufnahme in dem Wellenlängenspektrum außerhalb des sichtbaren Spektrums von der Auswerteeinheit erkannt wurden. Durch die Verwendung von mindestens zwei Bildgebenden Sensoren in einer definierten Orientierung und einem definiertem Abstand zueinander lässt sich eine dreidimensionale Oberflächeninformation der Fasermaterialoberfläche erzeugen, aus der dann entsprechende Fehlstellen identifizierbar sind. Hierfür ist es jedoch notwendig, dass die beiden Bilder, die sowohl von dem ersten als auch von dem zweiten Bildsensor aufgenommen wurden, in Deckung gebracht werden, sodass ein Bildpunkt in dem ersten Bild auch den entsprechenden Bildpunkt in dem zweiten Bild entspricht. Aufgrund der Bewegung des Faserlegekopfes sowie einer mangelnden zeitlichen Synchronisation ist dies nicht immer gegeben. Durch die Identifikation der Rückstände beziehungsweise Ablagerungen von Matrixmaterial, wie es in Figur 2 gezeigt ist und die sich aufgrund der Aufnahme der Fasermaterialoberfläche im Wellenlängenspektrum außerhalb des sichtbaren Lichtes identifizieren lassen, können die beiden Einzelbilder des ersten Bildsensors und des zweiten Bildsensors in Deckung gebracht werden.

Denn es wurde erkannt, dass die Rückstände und Ablagerungen von Matrixmaterial auf der Fasermaterialoberfläche hinsichtlich der Form und Häufigkeit derart charakteristisch sind, dass sie als Positionsinformation bei der Berechnung einer dreidimensionalen Oberflächeninformation aus zwei Einzelbildern genutzt werden kann.

Demzufolge wird sowohl in dem ersten Einzelbild b₁ und als auch in dem zweiten Einzelbild b₂ die Ablagerungen beziehungsweise Rückstände 30 erkannt, wobei dann die beiden Einzelbilder b₁ und b₂ unter Kenntnis der erkannten Ablagerungen 30 in Deckung gebracht werden.

### Bezugszeichenliste

- 10: Faserlegeanlage
- 11: robotische Faserlegeeinheit
- 12: Bewegungsautomat
- 13: Faserlegekopf
- 14: Fasermaterialspeicher
- 15: Fasermaterial
- 16: Formwerkzeug
- 17: Faserlaminat
- 18: Anlagensteuerung
- 19: Aufnahmevorrichtung
- 20a, 20b: digitale Bildsensoren
- 21: Auswerteeinheit
- 22: digitaler Datenspeicher
- 30: Ablagerungen/Rückstände von Matrixmaterial
- b₁: erstes Einzelbild
- b₂: zweites Einzelbild

## Patentansprüche

1. Verfahren zum Ermitteln von Fehlstellen von auf einem Werkzeug abgelegtem, vorimprägniertem Fasermaterial (15) eines Faserverbundwerkstoffes zur Herstellung eines Faserverbundbauteils, wobei das Verfahren die folgenden Schritte umfasst:
- Aufnehmen der Fasermaterialoberfläche des abgelegten, vorimprägnierten Fasermaterials (15) durch mindestens zwei Bildsensoren (20a, 20b) einer bildgebenden Aufnahmevorrichtung (19) in einem Wellenlängenspektrum außerhalb des sichtbaren Spektrums, um digitale Bilddaten der Fasermaterialoberfläche zu generieren; und
- Ermitteln einer Fehlstelle an dem abgelegten, vorimprägnierten Fasermaterials (15) in Abhängigkeit von den durch die Aufnahmevorrichtung (19) aufgenommenen digitalen Bilddaten der Fasermaterialoberfläche mittels einer Auswerteeinheit (21),
wobei erste Bilddaten von einem ersten Bildsensor (20a) der Aufnahmevorrichtung (19) aus einer ersten Aufnahmerichtung und mindestens zweite Bilddaten von einem mindestens zweiten Bildsensor (20b) der Aufnahmevorrichtung (19) aus einer von der ersten Aufnahmerichtung verschiedenen zweiten Aufnahmerichtung aufgenommen werden, aus den ersten Bilddaten und den zweiten Bilddaten eine dreidimensionale Oberflächeninformation der Fasermaterialoberfläche mittels der Auswerteeinheit (21) erstellt wird und eine Fehlstelle in Abhängigkeit von der erstellten Oberflächeninformation mittels der Auswerteeinheit (21) ermittelt wird, wobei in den aufgenommenen digitalen Bilddaten mittels einer auf der Auswerteeinheit (21) ausgeführten Bilderkennung Ablagerungen (30) von Matrixmaterial auf dem abgelegten, vorimprägnierten Fasermaterial (15) detektiert werden und wobei mittels der Auswerteeinheit (21) die ersten Bilddaten und die zweiten Bilddaten in Abhängigkeit von den in den ersten Bilddaten und den zweiten Bilddaten enthaltenen charakteristischen Ablagerungen (30) von Matrixmaterial in Deckung gebracht werden, wobei die dreidimensionale Oberflächeninformation der Fasermaterialoberfläche dann in Abhängigkeit von den in Deckung gebrachten digitalen Bilddaten erstellt wird.

2. Verfahren nach Anspruch 1, **dadurch gekennzeichnet, dass** die Faserlaminatoberfläche mittels der bildgebenden Aufnahmevorrichtung (19) in einem Wellenlängenspektrum außerhalb der Wellenlänge zwischen 400 nm und 750 nm aufgenommen wird.

3. Verfahren nach Anspruch 1 oder 2, **dadurch gekennzeichnet, dass** die Faserlaminatoberfläche mittels der bildgebenden Aufnahmevorrichtung (19) in einem Wellenlängenspektrum im Infrarotstrahlenbereich aufgenommen wird und/oder dass die Faserlaminatoberfläche mittels der bildgebenden Aufnahmevorrichtung (19) in einem Wellenlängenspektrum im Ultraviolettstrahlenbereich aufgenommen wird.

4. Verfahren nach einem der vorhergehenden Ansprüche, **dadurch gekennzeichnet, dass** Stufen, Überlappungen, Spalten, Verwerfungen, Welligkeiten, Lufteinschlüsse, Fremdkörper, Materialablösungen, Materialansammlungen und/oder Materialfehler als Fehlstellen erkannt werden.

5. Verfahren nach einem der vorhergehenden Ansprüche, **dadurch gekennzeichnet, dass** während der Aufnahme der Fasermaterialoberfläche
- die Bildsensoren der Aufnahmevorrichtung (19) gegenüber der Fasermaterialoberfläche verfahren werden und/oder
- das abgelegte Fasermaterial (15) gegenüber den Bildsensoren bewegt wird.

6. Verfahren nach einem der vorhergehenden Ansprüche, **dadurch gekennzeichnet, dass** die Bildsensoren der Aufnahmevorrichtung (19) im Nachlauf mit einem Faserlegekopf (13) einer Faserlegeanlage (10) während des Ablegens des Fasermaterials (15) gegenüber dem bereits abgelegten Fasermaterial (15) bewegt wird.

7. Verfahren nach einem der vorhergehenden Ansprüche, **dadurch gekennzeichnet, dass** die Fasermaterialoberfläche des abgelegten, vorimprägnierten Fasermaterials (15) mit elektromagnetischer Strahlung mit Wellenlängen außerhalb des sichtbaren Spektrums bestrahlt wird.

8. Faserlegeanlage (10) zum Ablegen von Fasermaterial (15) auf einem Werkzeug zur Herstellung eines Faserverbundbauteils, wobei die Faserlegeanlage (10) eine Aufnahmevorrichtung (19) mit mindestens zwei Bildsensoren (20a, 20b) und eine Auswerteeinheit (21) aufweist und zur Durchführung des Verfahrens nach einem der vorhergehenden Ansprüche ausgebildet ist.

## Claims

1. Method for determining defects of preimpregnated fibre material (15) of a fibre composite material for producing a fibre composite component, said fibre material having been deposited on a tool, wherein the method comprises the following steps:
- recording the fibre material surface of the deposited, preimpregnated fibre material (15) by means of at least two image sensors (20a, 20b) of an imaging recording device (19) in a wavelength spectrum outside the visible spectrum in order to generate digital image data of the fibre material surface; and
- determining a defect on the deposited, preimpregnated fibre material (15), depending on the digital image data of the fibre material surface recorded by the recording device (19), by means of an evaluation unit (21),
wherein first image data are recorded by a first image sensor (20a) of the recording device (19) from a first recording direction and at least second image data are recorded by an at least second image sensor (20b) of the recording device (19) from a second recording direction, which is different from the first recording direction, three-dimensional surface information of the fibre material surface is created from the first image data and the second image data by means of the evaluation unit (21) and a defect is determined, depending on the surface information created, by means of the evaluation unit (21), wherein deposits (30) of matrix material on the deposited, preimpregnated fibre material (15) are detected in the recorded digital image data by means of an image recognition implemented on the evaluation unit (21), and wherein, by means of the evaluation unit (21), the first image data and the second image data are brought to congruence depending on the characteristic deposits (30) of matrix material contained in the first image data and the second image data, wherein the three-dimensional surface information of the fibre material surface is then created depending on the digital image data brough to congruence.

2. Method according to Claim 1, **characterized in that** the fibre laminate surface is recorded in a wavelength spectrum outside the wavelength of between 400 nm and 750 nm by means of the imaging recording device (19).

3. Method according to Claim 1 or 2, **characterized in that** the fibre laminate surface is recorded in a wavelength spectrum in the infrared radiation range by means of the imaging recording device (19), and/or **in that** the fibre laminate surface is recorded in a wavelength spectrum in the ultraviolet radiation range by means of the imaging recording device (19).

4. Method according to any of the preceding claims, **characterized in that** steps, overlaps, gaps, warpages, undulations, air inclusions, foreign bodies, material detachments, material accumulations and/or material flaws are identified as defects.

5. Method according to any of the preceding claims, **characterized in that** during the recording of the fibre material surface
- the image sensors of the recording device (19) are moved relative to the fibre material surface and/or
- the deposited fibre material (15) is moved relative to the image sensors.

6. Method according to any of the preceding claims, **characterized in that** the image sensors of the recording device (19) are moved relative to the already deposited fibre material (15) in a manner tracking a fibre laying head (13) of a fibre laying installation (10) during the depositing of the fibre material (15).

7. Method according to any of the preceding claims, **characterized in that** the fibre material surface of the deposited, preimpregnated fibre material (15) is irradiated with electromagnetic radiation having wavelengths outside the visible spectrum.

8. Fibre laying installation (10) for depositing fibre material (15) on a tool for producing a fibre composite component, wherein the fibre laying installation (10) comprises a recording device (19) having at least two image sensors (20a, 20b) and an evaluation unit (21) and is configured for carrying out the method according to any of the preceding claims.

## Revendications

1. Procédé de détection d'imperfections d'un matériau fibreux préimprégné (15), posé sur un outil, d'un matériau composite fibreux pour la fabrication d'une pièce en matériau composite fibreux, le procédé comprenant les étapes suivantes consistant à :
- enregistrer la surface du matériau fibreux préimprégné posé (15) par au moins deux capteurs d'image (20a, 20b) d'un dispositif d'enregistrement d'images (19) dans un spectre de longueurs d'onde en dehors du spectre visible, afin de générer des données d'image numériques de la surface du matériau fibreux ; et
- déterminer une imperfection au niveau du matériau fibreux préimprégné posé (15) en fonction des données d'image numériques de la surface du matériau fibreux, enregistrées par le dispositif d'enregistrement (19), au moyen d'une unité d'évaluation (21),
dans lequel
des premières données d'image sont enregistrées par un premier capteur d'image (20a) du dispositif d'enregistrement (19) à partir d'une première direction d'enregistrement, et au moins des deuxièmes données d'image sont enregistrées par au moins un deuxième capteur d'image (20b) du dispositif d'enregistrement (19) à partir d'une deuxième direction d'enregistrement différente de la première direction d'enregistrement,
une information de surface tridimensionnelle de la surface du matériau fibreux est établie à partir des premières données d'image et des deuxièmes données d'image au moyen de l'unité d'évaluation (21), et
une imperfection est déterminée en fonction de l'information de surface établie au moyen de l'unité d'évaluation (21),
dans les données d'image numériques enregistrées, des dépôts (30) de matériau matriciel sur le matériau fibreux préimprégné posé (15) sont détectés au moyen d'une détection d'image mise en œuvre sur l'unité d'évaluation (21), et
au moyen de l'unité d'évaluation (21), les premières données d'image et les deuxièmes données d'image sont mises en coïncidence en fonction des dépôts caractéristiques (30) de matériau matriciel contenus dans les premières données d'image et dans les deuxièmes données d'image, l'information de surface tridimensionnelle de la surface du matériau fibreux est alors établie en fonction des données d'image numériques mises en coïncidence.

2. Procédé selon la revendication 1, **caractérisé en ce que** la surface du stratifié fibreux est enregistrée au moyen du dispositif d'enregistrement d'images (19) dans un spectre de longueurs d'onde en dehors de la longueur d'onde comprise entre 400 nm et 750 nm.

3. Procédé selon la revendication 1 ou 2, **caractérisé en ce que** la surface du stratifié fibreux est enregistrée au moyen du dispositif d'enregistrement d'images (19) dans un spectre de longueurs d'onde dans le domaine des rayons infrarouges, et/ou **en ce que** la surface du stratifié fibreux est enregistrée au moyen du dispositif d'enregistrement d'images (19) dans un spectre de longueurs d'onde dans le domaine des rayons ultraviolets.

4. Procédé selon l'une des revendications précédentes, **caractérisé en ce que** l'on reconnaît comme imperfections des gradins, des chevauchements, des fentes, des gauchissements, des ondulations, des inclusions d'air, des corps étrangers, des décollements de matériau, des accumulations de matériau et/ou des défauts de matériau.

5. Procédé selon l'une des revendications précédentes, **caractérisé en ce que**, pendant l'enregistrement de la surface du matériau fibreux,
- les capteurs d'image du dispositif d'enregistrement (19) sont déplacés par rapport à la surface du matériau fibreux,
et/ou
- le matériau fibreux posé (15) est déplacé par rapport aux capteurs d'image.

6. Procédé selon l'une des revendications précédentes, **caractérisé en ce que** pendant la pose du matériau fibreux (15), les capteurs d'image du dispositif d'enregistrement (19) sont déplacés en aval par rapport au matériau fibreux (15) déjà posé avec une tête de pose de fibres (13) d'une installation de pose de fibres (10).

7. Procédé selon l'une des revendications précédentes, **caractérisé en ce que** la surface du matériau fibreux préimprégné posé (15) est irradiée par un rayonnement électromagnétique ayant des longueurs d'onde en dehors du spectre visible.

8. Installation de pose de fibres (10) pour poser un matériau fibreux (15) sur un outil de fabrication d'une pièce en matériau composite fibreux, dans laquelle l'installation de pose de fibres (10) comprend un dispositif d'enregistrement (19), pourvu d'au moins deux capteurs d'image (20a, 20b), et une unité d'évaluation (21), et est réalisée pour mettre en œuvre le procédé selon l'une des revendications précédentes.
